(19) Europäisches Patentamt / European Patent Office / Office européen des brevets

(11) **EP 1 441 267 B1**

(12) **EUROPEAN PATENT SPECIFICATION**

(45) Date of publication and mention
of the grant of the patent:
**24.10.2007 Bulletin 2007/43**

(21) Application number: **02736138.5**

(22) Date of filing: **17.06.2002**

(51) Int Cl.:
*G05B 13/04* $^{(2006.01)}$   *G05B 19/414* $^{(2006.01)}$

(86) International application number:
**PCT/JP2002/006025**

(87) International publication number:
**WO 2003/034160 (24.04.2003 Gazette 2003/17)**

(54) **CONTROL METHOD FOR A SERVO CONTROL APPARATUS**

STEUERVERFAHREN FÜR EINE SERVOSTEUERVORRICHTUNG

PROCEDE DE COMMANDE D'UN APPAREIL DE SERVOCOMMANDE

(84) Designated Contracting States:
**DE GB**

(30) Priority: **09.10.2001 JP 2001311790**

(43) Date of publication of application:
**28.07.2004 Bulletin 2004/31**

(73) Proprietor: **KABUSHIKI KAISHA YASKAWA DENKI**
**Kitakyushu-Shi,**
**Fukuoka 806-0004 (JP)**

(72) Inventors:
 • **IMAZU, Atsushi,**
   **KABUSHIKI KAISHA YASKAWA DENKI**
   **Kitakyushu-shi,**
   **Fukuoka 806-0004 (JP)**
 • **NAKAMURA, Hiroshi,**
   **KABUSHIKI KAISHA YASKAWA DENKI**
   **Kitakyushu-shi,**
   **Fukuoka 806-0004 (JP)**
 • **HONDA, Hideki,**
   **KABUSHIKI KAISHA YASKAWA DENKI**
   **Kitakyushu-shi,**
   **Fukuoka 806-0004 (JP)**
 • **HAGIHARA, Jun,**
   **KABUSHIKI KAISHA YASKAWA DENKI**
   **Kitakyushu-shi,**
   **Fukuoka 806-0004 (JP)**

(74) Representative: **Weigelt, Udo et al**
**Grünecker, Kinkeldey**
**Stockmair & Schwanhäusser**
**Anwaltssozietät**
**Maximilianstrasse 58**
**80538 München (DE)**

(56) References cited:
**WO-A-01/18622**          **DE-A1- 4 303 090**
**JP-A- 6 137 107**        **JP-A- 7 028 508**
**JP-A- 8 123 537**        **JP-A- 10 225 142**
**US-A- 4 663 703**        **US-A- 5 073 748**

 • **BULGRIN T C ET AL: "APPLICATION OF ADVANCED CONTROL THEORY TO ENHANCE MOLDING MACHINE PERFORMANCE" IEEE TRANSACTIONS ON INDUSTRY APPLICATIONS, IEEE SERVICE CENTER, PISCATAWAY, NJ, US, vol. 31, no. 6, November 1995 (1995-11), pages 1350-1357, XP000550016 ISSN: 0093-9994**

## Description

(Technical Field)

The present invention relates to a control method of a servo control apparatus for receiving target commands from a host controller every certain period and causing an output of a controlled object to follow the target commands, and particularly to a control method capable of speedily responding to the target commands.

(Background Art)

It is found that predictive and preview control using the next target command value is effective as a servo control method for causing an output of a controlled object to follow a target command and, for example, in JP-A-Hei7-28508, preview control is performed using the next target command incremental value, the past control input incremental value, an incremental output value of a controlled object, a deviation of the controlled object and predetermined preview control parameters.

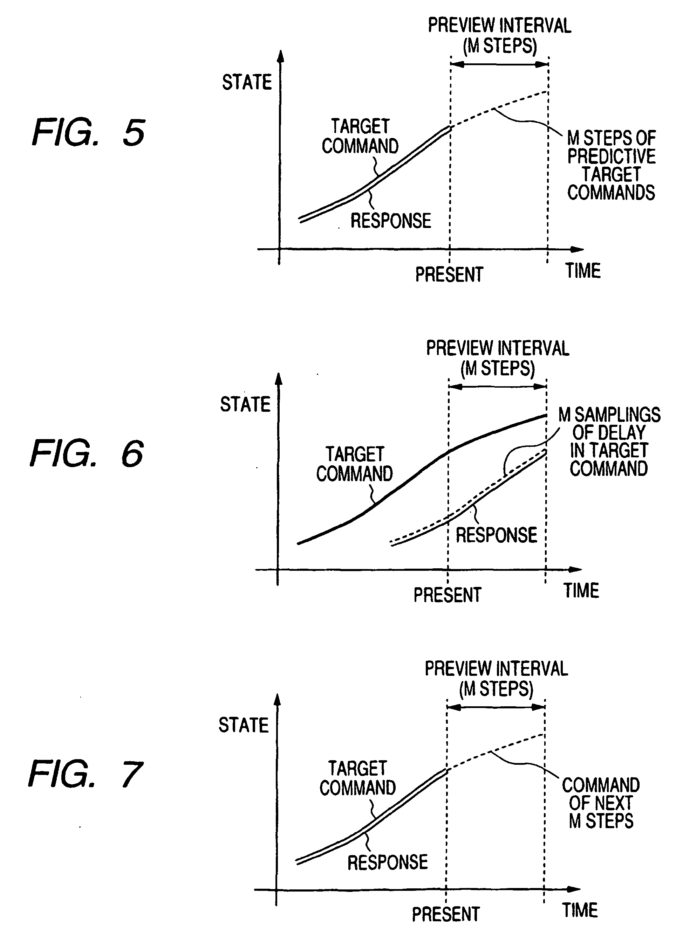

However, in the case of performing predictive and preview control by receiving a target command value at the present time from a host controller every certain period, a motion is performed by considering that the target command value at the present time is a target command value of the next M steps, so that there was a problem that the motion delays by M samplings as shown in Fig. 6.

Therefore, a technique for solving the problem is developed and is disclosed in JP-A-HeiB-123537. According to that, it is characterized by using a command generator for generating target command values to the next M steps since the present time at sampling time of starting movement and generating only a target command value of the next M steps since the present time after the next sampling time, and as a result of this, the target command values to the next M steps since the present time can be used and M samplings of delay is solved as shown in Fig. 7.

However, in the control method disclosed in JP-A-8-123537, the command generator outputs the target command value of the next M steps with respect to the actual time, so that it is required that a motion be known. Accordingly, there was a problem of lack of flexibility with respect to a change in a command.

A method to generate reference variables for a position control loop of a numerically track controlled machine is disclosed in DE 4303090. Hereby, desired track values are provided by a numerical control system as a sequence of time discrete control values at discrete sampling intervals. A desired speed value v(k) respectively position value L(k) is derived, by means of a filter, in each case from the sequence of desired track values (L(k-n), v(k-i)) which are suitably weighted. The generated desired positioning values are used as reference values for the position control loop for smoothly controlling the machine from one track position to the next track position. The main idea of document D1 is the manipulation of the input values being interpolated in a first process to adapt the trait of movement of a machine to an individual prescribed process, whereby the new interpolated desired position values are used to smooth the movement of the machine. Hereby, the new interpolated desired position values are calculated on the basis of an already known sequence of track values.

WO 01/18622 relates to a method and circuitry for producing nominal position values for a closed loop position control of a numerical continuous path controlled machine. Using the history of past nominal position values, an interpolator element presets nominal position values with a defined interpolator clock rate that are digitally filtered in a nominal position value filter (FIR-filter) that is mounted downstream of the interpolator element. According to the document, the filtered nominal position values are used within a sample period between two already given nominal position values and are then transmitted to the closed loop position control which controls the movement on a continuous path with a defined position control clock rate. Furthermore, the interpolator clock rate is adjusted on the basis of the dynamic characteristics of the machine in such a manner that the filtered nominal position values, that are transmitted by the closed loop position control, do not cause any natural vibrations of the machine.

A review on the technology of digital filters for use in a control system is presented in the paper "Application of Advanced Control Theory to Enhance Molding Machine Performance, IEEE Service Center, Piscataway, NJ, US". In this document it is mentioned, that digital filters are used for smoothing, integration or prediction of signals. Mathematical operations on the current and past values of input signals are performed by the digital filters where the output signal vanes in a useful way from the input signal. The documents aims on applying a modem control theory to control a molding machine process more accurately. Hereby, the usage of a FIR filter is proposed that may extract signals, which have been distributed over numerous paths, equally spaced samples, and further stores the samples in a buffer to create a linear combination of these values.

(Disclosure of the Invention)

Therefore, an object of the invention is to be constructed so as to be able to follow without M samplings of delay and flexibly cope with a change in a command of a host controller even in a configuration of receiving a target command value at the present time from the host controller every certain period.

A control method of a servo control apparatus of the invention is characterized in that in a servo control apparatus for causing an output of a controlled object to follow target commands received from a host controller every certain period, predictive target commands to the next M steps are generated every each period using a history of the target commands and command follow-up control is performed by predictive and preview control or feedback gain switching control using the predictive target commands.

Further, the invention is characterized in that predictive target commands are generated for the next M steps, on the basis of a condition that second-order derivative values of the target commands are constant to the next M steps, predictive target command second-order derivative values are obtained and the predictive target command second-order derivative values are summed to calculate predictive target command derivative values and when the predictive target command derivative value exceeds a predetermined upper limit value, the predictive target command derivative value is changed to the upper limit value and when the predictive target command derivative value falls below a predetermined lower limit value, the predictive target command derivative value is changed to the lower limit value and when a sign of the predictive target command derivative value differs from a difference value of the target commands, the predictive target command derivative value is changed to zero and the predictive target command derivative values are summed to generate the predictive target commands.

(Brief Description of the Drawings)

Fig. 1 is a flowchart showing a processing procedure of a control method of the invention.
Fig. 2 is a flowchart showing a processing procedure of a second control method, which is not part of the invention as claimed.
Fig. 3 is a flowchart showing a processing procedure of a third control method.
Fig. 4 is a block diagram of a servo control system to which the method of the invention is applied.
Fig. 5 is a diagram showing a state of response by the method of the invention.
Fig. 6 is a diagram showing a state of response by a method of a conventional example 1.
Fig. 7 is a diagram showing a state of response by a method of a conventional example 2.
Fig. 8 is an example of a predictive target command by the second method.
Fig. 9 is an example of a predictive target command by the third method.

(Best Mode for Carrying Out the Invention)

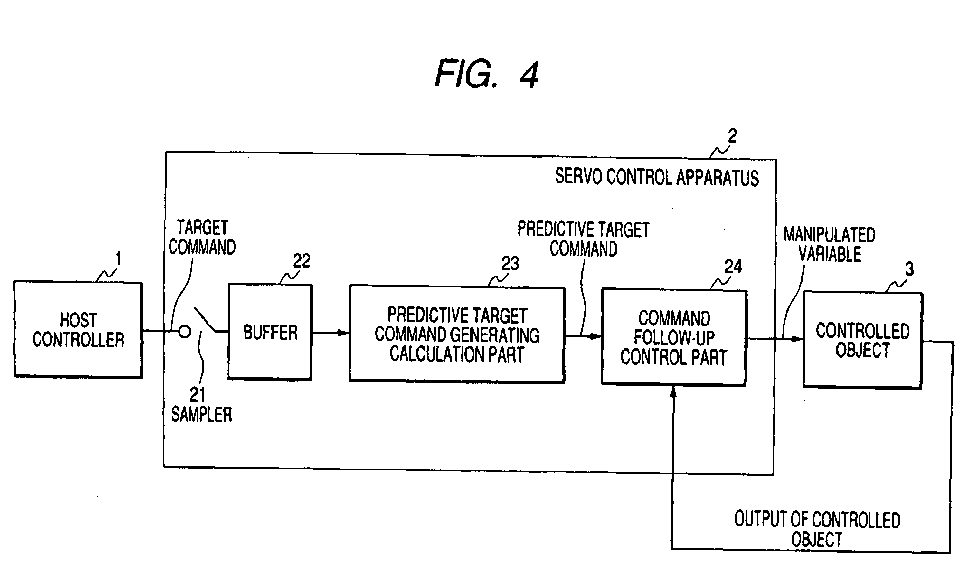

First, a servo control system for carrying out a method of the invention will be described using a block diagram of Fig. 4. In the diagram, numeral 1 is a host controller for outputting a target command, and numeral 2 is a servo control apparatus for performing control so that an output of a controlled object 3 follows the target command received from the host controller. The servo control apparatus 2 comprises a sampler 21, a buffer 22, a predictive target command generating part 23 and a command follow-up control part 24. When the command follow-up control part 24 and the controlled object 3 form a position control system, the command follow-up control part 24 comprises a driver such as a power amplifier and a position controller and an output of the controlled object 3 is information about a position outputted by a position detector provided inside the controlled object 3. When the command follow-up control part 24 and the controlled object 3 form a speed control system, the command follow-up control part 24 comprises a driver such as a power amplifier and a speed controller and an output of the controlled object 3 is information about a speed outputted by a speed detector provided inside the controlled object 3. The controlled object 3 comprises, for example, a motor, a ball screw, a table and the position detector or the speed detector, and a manipulated variable is a current supplied to the motor.

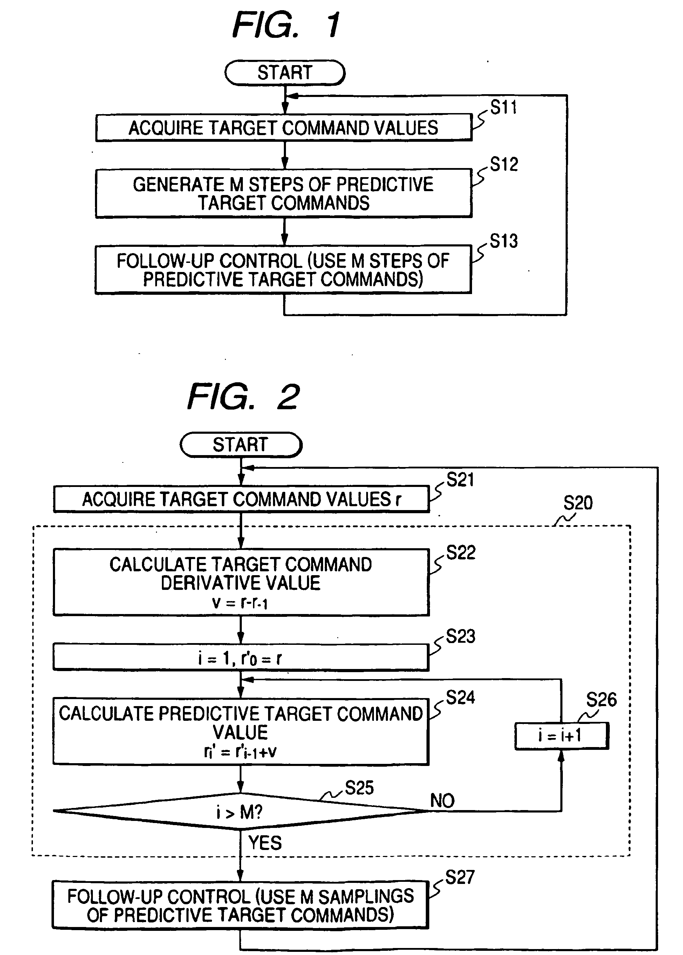

In such a configuration, when target commands are captured by the sampler 21 at certain periods, the target commands are buffered in the buffer 22. The target commands buffered are sequentially captured in the predictive target command generating calculation part 23 to calculate and output a predictive target command according to the method of the invention. When the predictive target command calculated is captured in the command follow-up control part 24, comparison with an output of the controlled object 3 is made and follow-up control is performed and a manipulated variable is outputted to the controlled object 3 to perform driving. Next, the method of the invention will be described in order along a processing procedure of a flowchart of Fig. 1.

(S11) The sampler 21 functions and target commands are acquired from the host controller 1 every sampling period and are buffered in the buffer 22.
(S12) Using a history of the target commands acquired, the predictive target command generating calculation part 23 generates M steps of predictive target commands. .
(S13) Using the predictive target commands, the predictive target command generating calculation part 23 performs predictive and preview control to perform follow-up control. Instead of the predictive and preview control, follow-up control maybe performed by deciding a state (in acceleration, deceleration, stop, etc.) of the next target command by the generated predictive target commands and performing feedback gain switching control for switching a feedback gain. Thereafter, the flowchart returns to (S11) and the procedure is repeated.

Fig. 2 is a flowchart showing a portion (S12) of the procedure of Fig. 1 in detail, which is not part of the invention as claimed and description will be made in order along this diagram.

(S21) The sampler 21 functions and target command values r are acquired from the host controller 1 every sampling period and are buffered in the buffer 22. Hereinafter, r0 is a target command value of this sample and r-i is a target command value of i samples past.
(S22) By a difference between the target command values r, a target command derivative value v is calculated using the following equation.

$$v = r0 - r\text{-}1$$

(S23) A counter i is initialized to 1 and an initial value r'0 of a predictive target command value is set to the present target command value r.
(S24) A predictive target command value r'i is calculated using the following equation.

$$r'i = r'i\text{-}1 + v$$

(S25) It is decided whether or not i exceeds M, and if so, the flowchart proceeds to (S27) and if not, the flowchart proceeds to (S26).
(S26) The i is counted up by 1.
By repeating by M steps in the procedure of (S24) to (S26), r'0 to r'm are calculated.
(S27) Using r'0 to r'm, command follow-up control is performed by predictive and preview control or feedback gain switching control, and the flowchart returns to (S21) and the procedure is repeated.

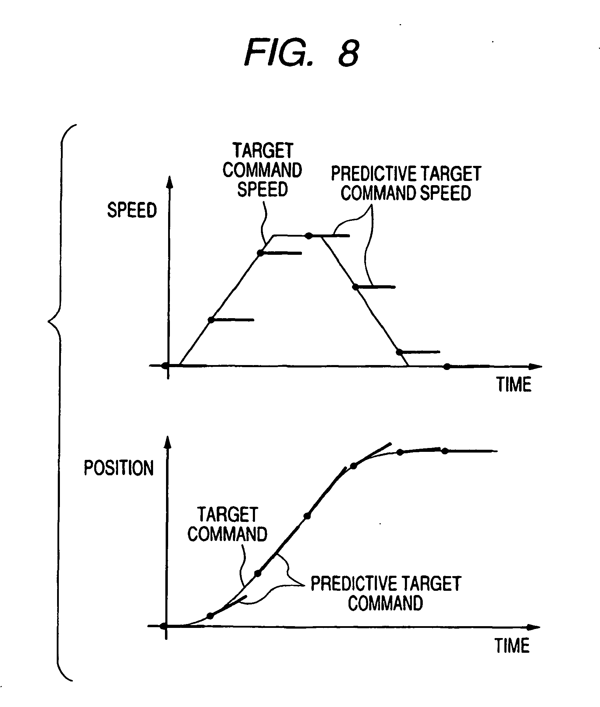

Incidentally, in the case of receiving a difference value of the target command from the host controller during the procedure described above, difference values of values received are set to v and the summation is set to r.
Next, a predictive target command calculated by the processing procedure mentioned above will be described. Fig. 8 is a predictive target command of the case of commanding a target position command in which a target command speed takes the form of a trapezoid speed. When a target command position and a target command speed change as shown by thin lines, with respect to several places shown by black circles, positions and speeds of predictive target command values predicted are shown by thick lines. As can be seen from this diagram, the predictive target command in which a target command is approximated by the algorithm described above can be obtained by simple and easy calculation.

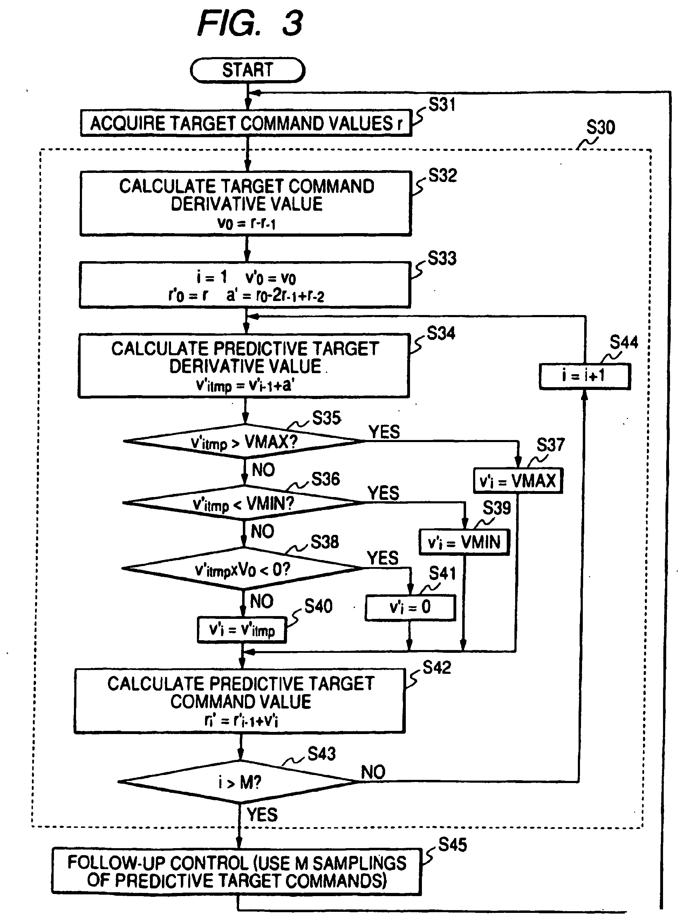

Fig. 3 is a flowchart improving a portion (S20) of the procedure of Fig. 2, and description will be made in order along this diagram. (S31) The sampler 21 functions and target commands r are acquired from the host controller 1 every sampling period and are buffered in the buffer 22. Hereinafter, r0 is a target command value of this sample and r-i is a target command value of i samples past. (S32) By a difference between the target command values r, a target command derivative value v0 is calculated using the following equation.

$$v0 = r0 - r\text{-}1$$

(S33) A counter i is initialized to 1 and an initial value r'0 of a predictive target command value is set to the present target command value r. Further, an initial value v'0 of a predictive target command derivative value is set to v0 and a predictive target command second-order derivative value a' is calculated using the following equation..

$$a = r0 - 2r\text{-}1 + r\text{-}2$$

(S34) A temporary predictive target command derivative value v' itmp is calculated by the following equation.

$$v'itmp = v'i\text{-}1 + a'$$

(S35) It is decided whether or not v'itmp is larger than a predictive target command derivative value maximum value VMAX, and if so, the flowchart proceeds to (S37) and if not, the flowchart proceeds to (S36) .
(S36) It is decided whether or not v' itmp is smaller than a predictive target command derivative value minimum value VMIN, and if so, the flowchart proceeds to (S39) and if not, the flowchart proceeds to (S38).
(S38) It is decided whether or not a product of v'itmp and v0 is smaller than 0, and if so, the flowchart proceeds to (S41) and if not, the flowchart proceeds to (S40).
(S37) It is set to v'i=VMAX and the flowchart proceeds to (S42).
(S39) It is set to v'i=VMIN and the flowchart proceeds to (S42).
(S41) It is set to v'i=0 and the flowchart proceeds to (S42).
(S40) It is set to v' i=v' itmp and the flowchart proceeds to (S42).
(S42) A predictive target command value r'i is calculated by the following equation.

$$r'i = r'i\text{-}1 + v'i$$

(S43) It is decided whether or not i exceeds M, and if so, the flowchart proceeds to (S45) and if not, the flowchart proceeds to (S44).
(S44) The i is counted up by 1 and the flowchart returns to (S34). By repeating the predictive target command value calculation step by M steps in the procedure of (S34) to (S44), r'0 to r'm are calculated.

(S45) Using r'0 to r'm, command follow-up control is performed by predictive and preview control or feedback gain switching control, and the flowchart returns to (S31) and the procedure is repeated. Incidentally, in the case of receiving a difference value of a position command from the host controller 1, difference values received may be set to v0 and the summation may be set to r.

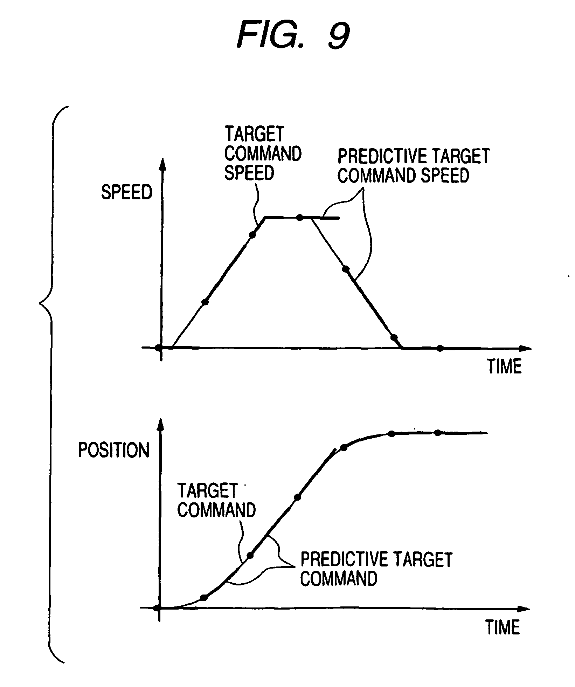

Next, a predictive target command calculated by the processing procedure mentioned above will be described. Fig. 9 is a predictive target command of the case of commanding a target position command in which a target command speed takes the form of a trapezoid speed. When a target command position and a target command speed change as shown by thin lines, with respect to several places shown by black circles, positions and speeds of predictive target command values predicted are shown by thick lines. As can be seen from this diagram, target commands of constant acceleration and deceleration can be predicted accurately except immediately after starts of acceleration and deceleration.

(Industrial Applicability)

According to the invention, predictive target commands to the next M steps are generated by a history of target command values, so that even in the case of sequentially receiving the present command from a host controller every certain period, predictive and preview control or feedback gain switching control using the next target command values can be performed without delay with respect to the target command values of the host controller.

Further, products of sampling times and second-order derivative values of target commands are summed to obtain derivative values of predictive target commands and products of sampling times and the derivative values of the predictive target commands are summed to obtain predictive target command values to the next M steps, so that target commands of constant acceleration and deceleration can be predicted accurately and further, there is an effect capable of performing predictive and preview control or gain switching control using the predictive target command values. Here, when derivatives of target command values move in a trapezoid by a condition that signs of derivative values of the predictive target command values remain unchanged and a condition that derivative values of the predictive target command values have upper limit and lower limit values, the predictive target command values for accurately predicting the time of a constant speed change and the time of a stop can be obtained.

**Claims**

1. A predictive control method of a servo control apparatus for causing a controlled object to follow predicted target command values comprising the steps of:

   receiving a target command value r for every sampling period from a host controller (1), **characterized in that**
   for each target command value r received for a sampling period, predicting M predicted target command values $r_i$ for the respective sampling period using said received target command value and another target command value of a past sampling period, wherein the M predicted target command values are used for controlling the object in the time span between the reception of said received target command value and the reception of a target command value for the following sampling period from the host controller, and
   performing command follow-up control (24) by predictive and preview control or feedback gain switching control with using the M predicted target command values,
   wherein the step of predicting M target command values is based on the assumption that the second-order derivative values of the target command values are constant for the M steps of the respective sampling period and further comprises:

      summing predicted target command second-order derivative values for calculating predicted target command derivative values,
      setting a respective predicted target command derivative value to an upper limit value, if the predicted target command derivative value exceeds the predetermined upper limit value (S35, S37, and
      setting a respective predicted target command derivative value to a lower limit value, if the predicted target command derivative value exceeds the predetermined lower limit value (S36, S39), and
      setting a respective predicted target command derivative value to zero, if the sign of the predicted target command derivative value differs from the sign of a difference value of the target command values (S38, S41), and
      generating predicted target command values by summing the predicted target command derivative values.

## Patentansprüche

**1.** Ein Prädiktionssteuerverfahren einer Servosteuerungsvorrichtung, um zu bewirken, dass ein gesteuertes Objekt vorausbestimmten Führungsbefehlsgrößen folgt, wobei das Verfahren folgende Schritte umfasst:

Empfangen einer Führungsbefehlsgröße r von einem Zentralsteuergerät (1) für jeden Abtastzeitraum,

**gekennzeichnet durch**

Prognostizieren von M vorausbestimmter Führungsbefehlsgrößen $r_i$ für einen entsprechenden Abtastzeitraum bezüglich jeder für den Abtastzeitraum empfangenen Führungsbefehlsgröße r, unter Verwendung der empfangenen Führungsbefehlsgröße und einer anderen Führungsbefehlsgröße eines früheren Abtastzeitraums, wobei die M vorausbestimmten Führungsbefehlsgrößen dazu dienen, das Objekt im Zeitraum zwischen dem Empfang der empfangenen Führungsbefehlsgröße und dem Empfang einer Führungsbefehlsgröße vom Zentralsteuergerät bezüglich des nachfolgenden Abtastzeitraums zu steuern, und

Durchführen einer Befehlsfolgeregelung (24) **durch** Prädiktions- und Vorausbestimmungssteuerung oder Verstärkerschaltungsregelung unter Verwendung der M vorausbestimmten Führungsbefehlsgrößen,

wobei der Schritt des Prognostizierens von M Führungsbefehlsgrößen auf der Annahme beruht, dass die Werte der Ableitung zweiter Ordnung der Führungsbefehlsgrößen konstant sind für die M Abschnitte des entsprechenden Abtastzeitzeitraums, und weiter umfasst:

Summieren von vorausbestimmten, zweifach abgeleiteten Führungsbefehlsgrößen, um vorausbestimmte, abgeleitete Führungsbefehlsgrößen zu berechnen,

Setzen einer jeweiligen vorausbestimmten, abgeleiteten Führungsbefehlsgröße auf einen oberen Grenzwert, wenn die vorausbestimmte, abgeleitete Führungsbefehlsgröße den vorgegebenen oberen Grenzwert überschreitet (S35, S37),

Setzen einer jeweiligen vorausbestimmten, abgeleiteten Führungsbefehlsgröße auf einen unteren Grenzwert, wenn die vorausbestimmte, abgeleitete Führungsbefehlsgröße den vorgegebenen unteren Grenzwert unterschreitet (S36, S39),

Setzen einer jeweiligen vorausbestimmten, abgeleiteten Führungsbefehlsgröße auf Null, wenn das Vorzeichen der vorausbestimmten, abgeleiteten Führungsbefehlsgröße sich von dem eines Differenzwertes der Führungsbefehlsgrößen unterscheidet (S38, S41), und

Erzeugen von vorausbestimmten Führungsbefehlsgrößen **durch** Summieren der vorausbestimmten, abgeleiteten Führungsbefehlsgrößen.

## Revendications

**1.** Procédé de contrôle prédictif d'un appareil de servocommande pour amener un objet contrôlé à suivre des valeurs de commande cibles prédites, comprenant les étapes consistant à :

recevoir une valeur de commande cible r pour chaque période d'échantillonnage en provenance d'un contrôleur hôte (1),

**caractérisé en ce que**

pour chaque valeur de commande cible r reçue pour une période d'échantillonnage, prédire M valeurs de commande cibles prédites $r_i$ pour la période d'échantillonnage respective en utilisant ladite valeur de commande cible reçue et une autre valeur de commande cible d'une période d'échantillonnage passée, dans lequel les M valeurs de commande cibles prédites sont utilisées pour contrôler l'objet au cours d'un intervalle de temps entre la réception de ladite valeur de commande cible reçue et la réception d'une valeur de commande cible pour la période d'échantillonnage suivante en provenance du contrôleur hôte, et

exécuter un régulation de suivi de commande (24) par un contrôle prédictif et de prévisualisation ou bien un contrôle de commutation à gain de rétroaction en utilisant les M valeurs de commande cibles prédites,

dans lequel l'étape de prédiction de M valeurs de commande cibles est basée sur la supposition selon laquelle les valeurs dérivées de second ordre des valeurs de commande cibles sont constantes pendant les M sections de la période d'échantillonnage respective, et comprend en outre les étapes consistant à :

additionner les valeurs dérivées de second ordre de commande cibles prédites de façon à calculer des valeurs dérivées de commande cibles prédites,

définir une valeur dérivée de commande cible prédite respective à une valeur de limite supérieure, si la valeur dérivée de commande cible prédite dépasse la valeur de limite supérieure prédéterminée (S35, S37), et

**EP 1 441 267 B1**

définir une valeur dérivée de commande cible prédite respective à une valeur de limite inférieure, si la valeur dérivée de commande cible prédite dépasse la valeur de limite inférieure prédéterminée (S36, S39), et

définir une valeur dérivée de commande cible prédite respective à la valeur de zéro, si le signe de la valeur dérivée de commande cible prédite diffère du signe d'une valeur de différence des valeurs de commande cibles (S38, S41), et

générer des valeurs de commande cibles prédites en additionnant les valeurs dérivées de commande cibles prédites.

## FIG. 1

```
                    ( START )
                        │
                        ▼
        ┌──────────────────────────────────┐   S11
        │  ACQUIRE TARGET COMMAND VALUES     │
        └──────────────────────────────────┘
                        │
                        ▼
        ┌──────────────────────────────────┐   S12
        │  GENERATE M STEPS OF PREDICTIVE    │
        │        TARGET COMMANDS             │
        └──────────────────────────────────┘
                        │
                        ▼
        ┌──────────────────────────────────┐   S13
        │  FOLLOW-UP CONTROL (USE M STEPS OF │
        │   PREDICTIVE TARGET COMMANDS)      │
        └──────────────────────────────────┘
```

## FIG. 2

```
                    ( START )
                        │
                        ▼
    ┌─────────────────────────────────────┐  S21
    │  ACQUIRE TARGET COMMAND VALUES r      │
    └─────────────────────────────────────┘
                        │                          S20
    ┌ ─ ─ ─ ─ ─ ─ ─ ─ ─ ┼ ─ ─ ─ ─ ─ ─ ─ ─ ─ ─ ─ ─ ─ ┐
                        ▼
    │ ┌─────────────────────────────────┐  S22      │
      │  CALCULATE TARGET COMMAND         │
    │ │       DERIVATIVE VALUE            │          │
      │          v = r-r₋₁                │
    │ └─────────────────────────────────┘          │
                        │
    │                   ▼                           │
      ┌─────────────────────────────────┐  S23
    │ │         i = 1, r'₀ = r            │          │
      └─────────────────────────────────┘
    │                   │                           │
                        ▼
    │ ┌─────────────────────────────────┐  S24      │      ┌──────────┐ S26
      │  CALCULATE PREDICTIVE TARGET      │                 │  i = i+1  │
    │ │           COMMAND VALUE           │          │      └──────────┘
      │        r'ᵢ = r'ᵢ₋₁+v              │
    │ └─────────────────────────────────┘          │
                        │
    │                   ▼              S25      NO   │
          ╱───────────────────────────╲
    │    ╱          i > M?              ╲──────────────┘
          ╲───────────────────────────╱            │
    │                   │
                       YES                          │
    └ ─ ─ ─ ─ ─ ─ ─ ─ ─ ┼ ─ ─ ─ ─ ─ ─ ─ ─ ─ ─ ─ ─ ─ ┘
                        ▼
    ┌─────────────────────────────────────┐  S27
    │  FOLLOW-UP CONTROL (USE M SAMPLINGS   │
    │   OF PREDICTIVE TARGET COMMANDS)      │
    └─────────────────────────────────────┘
```

In FIG. 2: S22 calculates the target command derivative value $v = r - r_{-1}$. S23 sets $i = 1$, $r'_0 = r$. S24 calculates the predictive target command value $r'_i = r'_{i-1} + v$. S25 tests $i > M?$. S26 sets $i = i+1$.

# FIG. 3

```
                    ┌──────────┐
                    │  START   │
                    └────┬─────┘
                         │
         ┌───────────────▼──────────────────┐  S31
         │ ACQUIRE TARGET COMMAND VALUES r   │
         └───────────────┬──────────────────┘       S30
                         │
         ┌───────────────▼──────────────────┐  S32
         │  CALCULATE TARGET COMMAND         │
         │  DERIVATIVE VALUE                 │
         │  v0 = r - r-1                     │
         └───────────────┬──────────────────┘
                         │
         ┌───────────────▼──────────────────┐  S33
         │  i = 1    v'0 = v0                │
         │  r'0 = r    a' = r0 - 2r-1 + r-2  │
         └───────────────┬──────────────────┘
                         │
         ┌───────────────▼──────────────────┐  S34       S44
         │  CALCULATE PREDICTIVE TARGET      │      ┌──────────┐
         │  DERIVATIVE VALUE                 │      │ i = i+1  │
         │  v'itmp = v'i-1 + a'              │      └──────────┘
         └───────────────┬──────────────────┘
```

- S31 ACQUIRE TARGET COMMAND VALUES r
- S30
- S32 CALCULATE TARGET COMMAND DERIVATIVE VALUE $v_0 = r - r_{-1}$
- S33 $i = 1 \quad v'_0 = v_0$ $\quad r'_0 = r \quad a' = r_0 - 2r_{-1} + r_{-2}$
- S34 CALCULATE PREDICTIVE TARGET DERIVATIVE VALUE $v'_{itmp} = v'_{i-1} + a'$
- S44 $i = i+1$
- S35 $v'_{itmp} > VMAX?$ — YES → S37 $v'_i = VMAX$
- S35 NO
- S36 $v'_{itmp} < VMIN?$ — YES → S39 $v'_i = VMIN$
- S36 NO
- S38 $v'_{itmp} \times v_0 < 0?$ — YES → S41 $v'_i = 0$
- S38 NO
- S40 $v'_i = v'_{itmp}$
- S42 CALCULATE PREDICTIVE TARGET COMMAND VALUE $r_i' = r'_{i-1} + v'_i$
- S43 $i > M?$ — NO
- S43 YES
- S45 FOLLOW-UP CONTROL (USE M SAMPLINGS OF PREDICTIVE TARGET COMMANDS)

# FIG. 4

SERVO CONTROL APPARATUS — 2

HOST CONTROLLER — 1

TARGET COMMAND

21 SAMPLER

BUFFER — 22

PREDICTIVE TARGET COMMAND GENERATING CALCULATION PART — 23

PREDICTIVE TARGET COMMAND

COMMAND FOLLOW-UP CONTROL PART — 24

MANIPULATED VARIABLE

CONTROLLED OBJECT — 3

OUTPUT OF CONTROLLED OBJECT

EP 1 441 267 B1

*FIG. 5*

*FIG. 6*

*FIG. 7*

# FIG. 8

# FIG. 9

**EP 1 441 267 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7028508 A
- JP 123537 A
- JP 8123537 A
- DE 4303090
- WO 0118622 A